# EUROPEAN PATENT APPLICATION

(11) **EP 4 783 433 A1**
(43) Date of publication of application: **29.07.2026**
(21) Application number: 24866845.1
(22) Date of filing: 29.04.2024
(51) Int. Cl.: H02K 9/19

(54) **ELECTRIC DRIVE ASSEMBLY AND VEHICLE**

(30) Priority: 21.09.2023 CN 202322568315 U
(71) Applicant: BYD Company Limited, Shenzhen, Guangdong 518118 (CN)
(72) Inventor: WANG, Jianxin, Shenzhen, Guangdong 518118 (CN); PAN, Li, Shenzhen, Guangdong 518118 (CN); LI, Bolong, Shenzhen, Guangdong 518118 (CN); GUO, Baojun, Shenzhen, Guangdong 518118 (CN)
(74) Representative: Mathys & Squire
(86) International application number: PCT/CN2024/090576
(87) International publication number: WO 2025/060421

(57) **Abstract**

A vehicle that includes an electric drive assembly is provided. The electric drive assembly includes a housing, a cooling assembly, an oil pump assembly, and a suction filter assembly. An oil chamber is formed at a bottom of the housing. The cooling assembly is disposed in the housing. The oil pump assembly is disposed in the housing, and the oil pump assembly is separately in communication with the oil chamber and the cooling assembly to pump cooling oil in the oil chamber into the cooling assembly. The suction filter assembly is disposed in the oil chamber, the suction filter assembly is provided with an oil suction port and an oil discharge port, the oil discharge port is in communication with the oil pump assembly, and the oil suction port is located below an oil level of the cooling oil in the oil chamber in response to a vehicle tilting laterally.

## Description

### CROSS-REFERENCE TO RELATED APPLICATION

This application claims priority to Chinese Patent Application No. 202322568315.3, filed with the China National Intellectual Property Administration on September 21, 2023 and entitled "ELECTRIC DRIVE ASSEMBLY AND VEHICLE", which is incorporated herein by reference in its entirety.

### TECHNICAL FIELD

This application relates to the field of vehicle technologies, and in particular, to an electric drive assembly and a vehicle.

### BACKGROUND

In related technologies, an electric drive assembly generally cools a motor using oil cooling or water cooling. For an oil-cooled electric drive assembly, an oil pump assembly is an important component. The oil pump assembly delivers cooling oil into a housing to cool the motor, and cools and lubricates gears, a differential, bearings, and the like.

However, because the oil pump assembly is generally arranged on a side of the housing, and vehicles traveling under complex working conditions are easily affected by factors such as road gradients and lateral tilting angles, the entire electric drive assembly is exposed to a relatively high risk of tilting. This may easily cause a rapid drop in oil levels at which an oil suction port at the bottom of the housing is located, resulting in oil starvation, and further causing problems such as lack of lubrication for gears and bearings and overheating due to insufficient cooling of the motor, which ultimately results in a loss of power output of the electric drive assembly.

### SUMMARY

This application is intended to resolve at least one of technical problems in the prior art. Accordingly, this application proposes an electric drive assembly. The electric drive assembly can prevent an oil pump assembly from suffering oil starvation. An oil suction port can still draw cooling oil into a suction filter assembly to normally cool a transmission and a motor.

This application further proposes a vehicle.

An electric drive assembly according to this application includes a housing, an oil chamber being formed at a bottom of the housing; a cooling assembly, the cooling assembly being disposed in the housing; an oil pump assembly, the oil pump assembly being disposed in the housing, and the oil pump assembly being separately in communication with the oil chamber and the cooling assembly to pump cooling oil in the oil chamber into the cooling assembly; and a suction filter assembly, the suction filter assembly being disposed in the oil chamber, the suction filter assembly being provided with an oil suction port and an oil discharge port, the oil discharge port being in communication with the oil pump assembly, and the oil suction port being located below an oil level of the cooling oil in the oil chamber in response to a vehicle tilting laterally.

In the electric drive assembly according to this application, the oil chamber is disposed at the bottom of the housing, so that the cooling oil can flow back into the oil chamber more effectively, reducing the flow of the cooling oil to other positions. The suction filter assembly is disposed in the oil chamber, so that the cooling oil in the oil chamber can be pumped out more effectively. Moreover, the oil suction port is located below the oil level of the cooling oil in the oil chamber in response to the vehicle tilting laterally, thereby preventing the oil pump assembly from suffering oil starvation. The oil suction port can still draw the cooling oil into the suction filter assembly to normally cool the transmission and the motor.

In some examples of this application, in response to the vehicle tilting forward, the oil level of the cooling oil has a first intersection position with the bottom of the housing; in response to the vehicle tilting backward, the oil level of the cooling oil has a second intersection position with the bottom of the housing; and the oil suction port is located between the first intersection position and the second intersection position.

In some examples of this application, a cross section of the oil suction port is configured as an arc structure.

In some examples of this application, the electric drive assembly further includes: a transmission, wherein the transmission is disposed at an upper left of the oil chamber; and a motor, wherein the motor is disposed at an upper right of the oil chamber, and the transmission and the motor are separately in communication with an oil outlet of the cooling assembly.

In some examples of this application, an oil return portion is disposed at the housing, the oil return portion is disposed below the motor, and the oil return portion is disposed to be inclined toward the oil chamber; and an angle at which the vehicle tilts to the right is α, an included angle between the oil return portion and a horizontal plane is β, and a relationship between α and β is: β≥α.

In some examples of this application, the electric drive assembly further includes: a motor end cover, wherein the motor end cover is disposed at an end of the motor away from the transmission, and the motor end cover is disposed to protrude toward an interior of the housing.

In some examples of this application, the oil pump assembly is disposed diagonally below an output shaft of the motor.

In some examples of this application, the transmission is provided with a first case, the motor is provided with a second case, the first case is connected to the second case, the second case is provided with a suction filter chamber, the suction filter assembly is disposed in the suction filter chamber, an oil pumping pipe is disposed between the suction filter assembly and the oil pump assembly, the oil pumping pipe is disposed at the first case, and the oil discharge port is disposed opposite to an inlet of the oil pumping pipe.

In some examples of this application, the electric drive assembly further includes a sealing member, wherein the sealing member is disposed between the first case and the second case.

A vehicle according to this application includes the foregoing electric drive assembly.

Additional aspects and advantages of this application will be set forth in part in the following descriptions, and in part will be apparent from the following description or may be learned through practice of this application.

### BRIEF DESCRIPTION OF DRAWINGS

The above and/or additional aspects and advantages of this application become apparent and easily understandable from the description of embodiments with reference to the following accompanying drawings, in which:
FIG. 1 is a diagram of connection of an electric drive assembly according to an embodiment of this application;
FIG. 2 is a diagram of a partial structure of an electric drive assembly at a first angle according to an embodiment of this application;
FIG. 3 is a diagram of a partial structure of an electric drive assembly at a second angle according to an embodiment of this application;
FIG. 4 is a sectional view of an electric drive assembly at a first angle according to an embodiment of this application;
FIG. 5 is a diagram of an electric drive assembly in response to a vehicle tilting backward;
FIG. 6 is a diagram of an electric drive assembly in response to a vehicle tilting forward;
FIG. 7 is a sectional view of an electric drive assembly at a second angle according to an embodiment of this application;
FIG. 8 is a diagram of an electric drive assembly in response to a vehicle tilting to the right;
FIG. 9 is a diagram of an electric drive assembly in response to a vehicle tilting to the left;
FIG. 10 is a partial sectional view of an electric drive assembly according to an embodiment of this application; and
FIG. 11 is a block diagram of a vehicle according to an embodiment of this application.

### Reference numerals:

vehicle 2;
electric drive assembly 1;
housing 10, oil chamber 11, cooling assembly 20, oil pump assembly 30, oil pumping pipe 31, suction filter assembly 40, oil suction port 41, oil discharge port 42, first intersection position 50, second intersection position 60, transmission 70, first case 71, motor 80, oil return portion 81, output shaft 83, second case 84, suction filter chamber 85, motor end cover 90, and sealing member 100.

### DESCRIPTION OF THE EMBODIMENTS

Embodiments of this application are described in detail below. Embodiments described with reference to the accompanying drawings are examples.

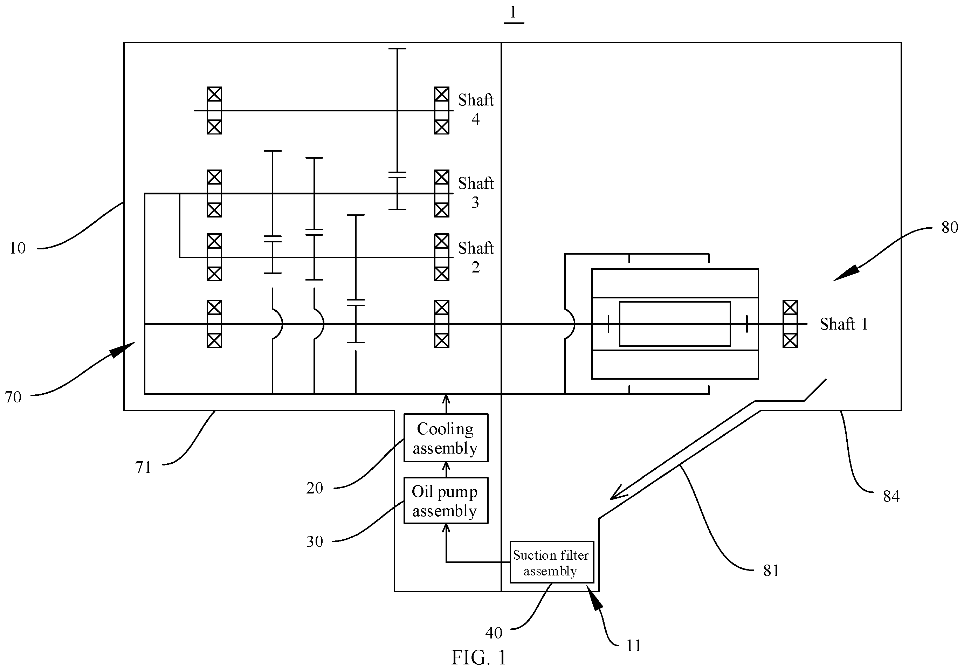

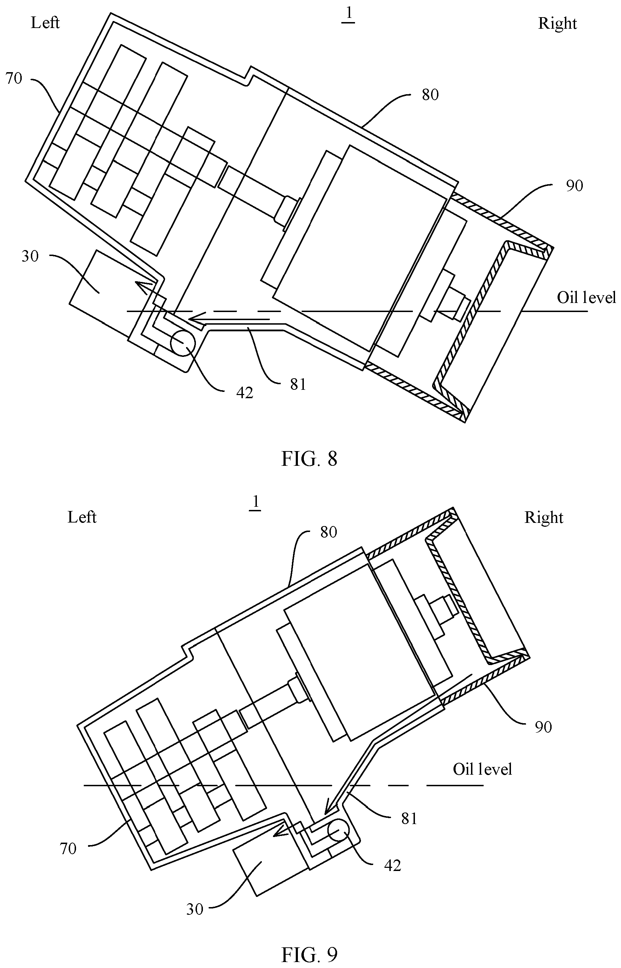

The following describes an electric drive assembly 1 according to an embodiment of this application with reference to FIG. 1 to FIG. 10.

As shown in FIG. 1 to FIG. 3, the electric drive assembly 1 according to the embodiment of this application includes a housing 10, a cooling assembly 20, an oil pump assembly 30, and a suction filter assembly 40. The housing 10 is an integral housing of the electric drive assembly 1, and may be configured to provide mounting and protection functions for internal components. The cooling assembly 20 is mainly configured to perform a cooling function and can be adapted to cool cooling oil. The oil pump assembly 30 may be configured to pump oil. The suction filter assembly 40 may be configured to perform a filtration function.

As shown in FIG. 1, the cooling assembly 20, the oil pump assembly 30, and the suction filter assembly 40 are all disposed in the housing 10, so that the cooling assembly 20, the oil pump assembly 30, and the suction filter assembly 40 can be fixed and disposed more firmly. This enables the cooling assembly 20, the oil pump assembly 30, and the suction filter assembly 40 to operate more stably. In addition, the housing 10 may also isolate the cooling assembly 20, the oil pump assembly 30, and the suction filter assembly 40 from an external environment, thereby preventing the external environment from affecting operations of the cooling assembly 20, the oil pump assembly 30, and the suction filter assembly 40.

As shown in FIG. 1, an oil chamber 11 is formed at a bottom of the housing 10, and the oil chamber 11 is mainly used for storing the cooling oil. The oil pump assembly 30 is separately in communication with the oil chamber 11 and the cooling assembly 20 to pump the cooling oil in the oil chamber 11 into the cooling assembly 20. In other words, when the electric drive assembly 1 needs to perform cooling, the oil pump assembly 30 is controlled to operate. The oil pump assembly 30 pumps out the cooling oil in the oil chamber 11, and then pumps the cooling oil into the cooling assembly 20. The cooling assembly 20 cools the cooling oil to lower temperature of the cooling oil. Finally, the cooled oil is supplied to the transmission 70 and the motor 80 to cool the transmission 70 and the motor 80, so that the transmission 70 and the motor 80 can operate more efficiently.

As shown in FIG. 1, FIG. 4 to FIG. 10, the suction filter assembly 40 is disposed in the oil chamber 11, the suction filter assembly 40 is provided with an oil suction port 41 and an oil discharge port 42, the oil discharge port 42 is in communication with the oil pump assembly 30, and the oil suction port 41 is located below an oil level of the cooling oil in the oil chamber 11. With the suction filter assembly 40 being disposed in the oil chamber 11, the oil chamber 11 is filled with the cooling oil in response to that a vehicle does not tilt laterally, and the suction filter assembly 40 is immersed in the cooling oil. When the oil pump assembly 30 pumps oil through the suction filter assembly 40, the oil suction port 41 may draw in the cooling oil, and the oil discharge port 42 may discharge the filtered cooling oil to the oil pump assembly 30.

In response to the vehicle tilting laterally, it will be understood that the cooling oil in the oil chamber 11 also tilts accordingly after the vehicle tilts laterally. In this case, it is necessary to ensure that the oil suction port 41 is always located under the oil level of the cooling oil in the oil chamber 11. When the oil suction port 41 is located below the oil level of the cooling oil in the oil chamber 11, the oil suction port 41 can still draw the cooling oil into the suction filter assembly 40 during operation of the electric drive assembly 1. That is, the oil pump assembly 30 may pump the cooling oil into the cooling assembly 20 so as to normally cool the transmission 70 and the motor 80.

Thus, the oil chamber 11 is disposed at the bottom of the housing 10, so that the cooling oil can flow back into the oil chamber 11 more effectively, reducing the flow of the cooling oil to other positions. The suction filter assembly 40 is disposed in the oil chamber 11, so that the cooling oil in the oil chamber 11 can be pumped out more effectively. Moreover, the oil suction port 41 is located below the oil level of the cooling oil in the oil chamber 11 in response to the vehicle tilting laterally, thereby preventing the oil pump assembly 30 from suffering oil starvation. The oil suction port 41 can still draw the cooling oil into the suction filter assembly 40 to normally cool the transmission 70 and the motor 80.

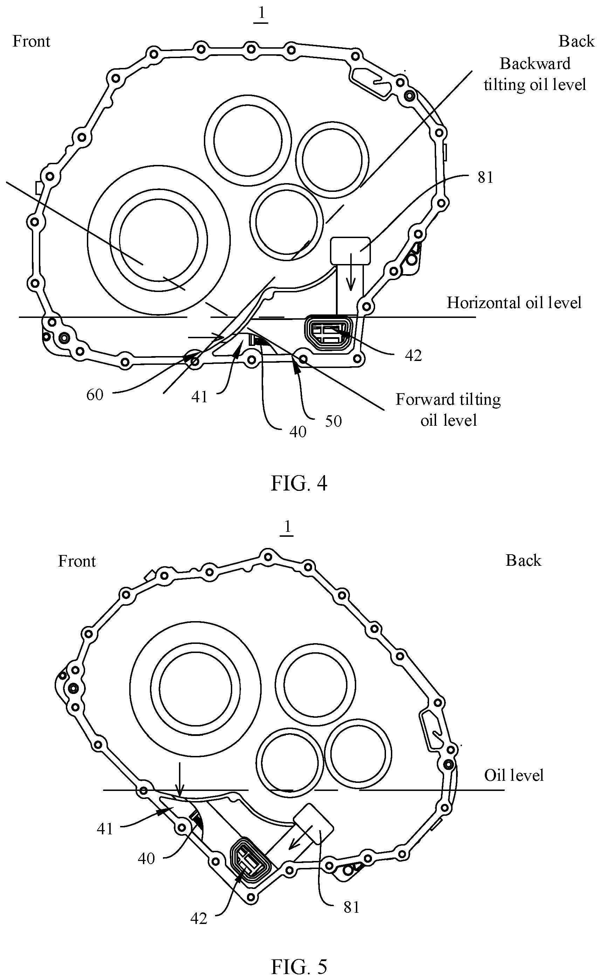

As shown in FIG. 4 to FIG. 6, in response to the vehicle tilting forward, the oil level of the cooling oil has a second intersection position with the bottom of the housing 10; in response to the vehicle tilting backward, the oil level of the cooling oil has a second intersection position 60 with the bottom of the housing 10; and the oil suction port 41 is located between the first intersection position 50 and the second intersection position 60. That is, in response to the vehicle tilting forward, the cooling oil also tilts forward accordingly. In this case, a rear portion of the cooling oil intersects with the bottom of the housing 10, which is the first intersection position 50. It will be understood that a position in front of this position is below the oil level of the cooling oil. Similarly, in response to the vehicle tilting backward, the cooling oil also tilts backward. In this case, a front portion of the cooling oil intersects with the bottom of the housing 10, which is the second intersection position 60. It will be understood that a position at rear of this position is below the oil level of the cooling oil. It should be noted that the first intersection position 50 is located on a rear side of the second intersection position 60. Thus, between the first intersection position 50 and the second intersection position 60, the oil suction port 41 is located below the oil level of the cooling oil in response to the vehicle tilting forward or backward. In this way, the oil suction port 41 is disposed between the first intersection position 50 and the second intersection position 60, so that the oil pump assembly 30 can be prevented from oil starvation in response to the vehicle tilting forward or backward, and the oil suction port 41 can still draw the cooling oil into the suction filter assembly 40 to normally cool the transmission 70 and the motor 80.

Further, as shown in FIG. 4 to FIG. 6, a cross section of the oil suction port 41 is configured as an arc structure. It should be noted that positions of oil level lines under different tilting angles are obtained through simulation or calculation, so that a curve of the oil suction port 41 is fitted to be tangent to these oil level lines. In this way, the cross section of the oil suction port 41 can be maximized in a case that the oil suction port 41 is below each oil level at various tilting angles, so that an oil suction flow rate meets requirements.

In addition, as shown in FIG. 1, FIG. 7 and FIG. 9, the electric drive assembly 1 further includes the transmission 70 and the motor 80. The transmission 70 is disposed at an upper left of the oil chamber 11. The motor 80 is disposed at an upper right of the oil chamber 11, and the transmission 70 and the motor 80 are separately in communication with an oil outlet of the cooling assembly 20. The transmission 70 is mainly configured to change a rotational speed and torque of the engine, and the motor 80 can provide an electric driving force after operation. The transmission 70 is disposed at an upper left of the oil chamber 11, the motor 80 is disposed on an upper right of the oil chamber 11, and the transmission 70 and the motor 80 are located at the same height, which facilitates disposition of the transmission 70 and the motor 80 and can reduce occupied space of the transmission 70 and the motor 80. In addition, the cooling oil in the oil chamber 11 can be supplied to the transmission 70 and the motor 80 more efficiently. The transmission 70 and the motor 80 are separately in communication with the oil outlet of the cooling assembly 20, so that the cooling oil can be supplied to the transmission 70 and the motor 80 separately after passing through the oil outlet of the cooling assembly 20, cooling the transmission 70 and the motor 80. This makes the transmission 70 and the motor 80 operate more stably.

Of course, as shown in FIG. 1, FIG. 4 to FIG. 9, the housing 10 is provided with an oil return portion 81, the oil return portion 81 is disposed below the motor 80, and the oil return portion 81 is disposed to be inclined toward the oil chamber 11; and an angle at which the vehicle tilts to the right is α, an included angle between the oil return portion 81 and a horizontal plane is β, and a relationship between α and β is: β≥α. The oil return portion 81 is disposed in the housing 10, the oil return portion 81 is disposed below the motor 80, and the oil return portion 81 is disposed to be inclined toward the oil chamber 11, so that the cooling oil passing through the motor 80 can flow back into the oil chamber 11 through the oil return portion 81. This forms a cycle in the electric drive assembly 1.

The angle at which the vehicle tilts to the right is α, the included angle between the oil return portion 81 and a horizontal plane is β, and β≥α. It will be understood that in response to the vehicle tilting to the right, the cooling oil also tilts to the right and flows to the right as a whole. Since the oil return portion 81 is disposed to be inclined toward the oil chamber 11, when the included angle between the oil return portion 81 and a horizontal plane gradually increases, the oil return portion 81 gradually blocks the cooling oil in the oil chamber 11 from flowing to the right in reponse to the vehicle tilting to the right. When the included angle between the oil return portion 81 and a horizontal plane is greater than or equal to the angle at which the vehicle tilts to the right, the oil return portion 81 can block the cooling oil in the oil chamber 11 from flowing to the right in response to the vehicle tilting to the right, so that the cooling oil can be stored in the oil chamber 11, preventing the oil pump assembly 30 from suffering oil starvation. The oil suction port 41 can still draw the cooling oil into the suction filter assembly 40 to normally cool the transmission 70 and the motor 80.

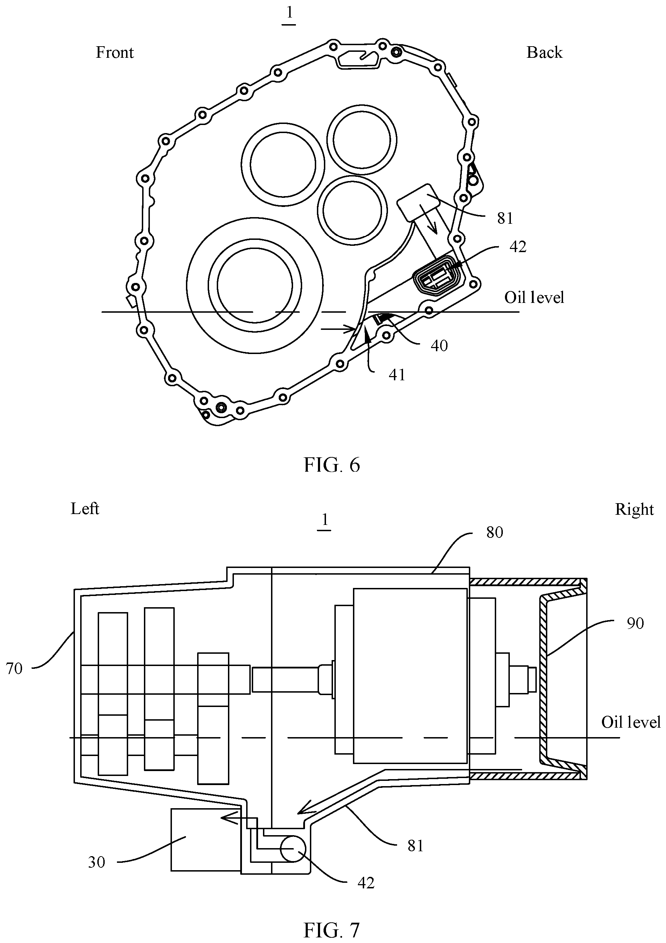

In addition, as shown in FIG. 7 to FIG. 9, the electric drive assembly 1 further includes a motor end cover 90, where the motor end cover 90 is disposed at an end of the motor 80 away from the transmission 70, and the motor end cover 90 protrudes toward an interior of the housing 10. The motor end cover 90 is configured to serve as a rear cover of the motor 80, and may completely enclose and fix internal components of the motor 80 to prevent the internal components from being damaged or failure due to external influences, and may protect the motor 80 and prevent foreign objects from entering the motor 80. The motor end cover 90 is disposed at the end of the motor 80 away from the transmission 70, so that the motor end cover 90 may not interfere with connection between the transmission 70 and the motor 80. In addition, the motor end cover 90 is closer to the housing 10 and may be in communication with the outside, thereby facilitating heat dissipation of the motor 80. The motor end cover 90 is disposed to protrude toward the interior of the housing 10, so that a volume of a chamber in the motor end cover 90 in right is reduced on a premise that a safe distance of the motor 80 is ensured, further reducing an oil storage capacity of the motor 80. This can make more cooling oil on the motor 80 flow back to the oil chamber 11, preventing the oil pump assembly 30 from suffering oil starvation.

It should be noted that since space on a side of the transmission 70 is small, when the electric drive assembly 1 tilts to the left along with the vehicle, there is no a large amount of oil accumulated on a side of the transmission 70 on the left, and the oil level is much higher than the oil suction port 41. Thus, the oil pump assembly 30 does not suffer from oil starvation.

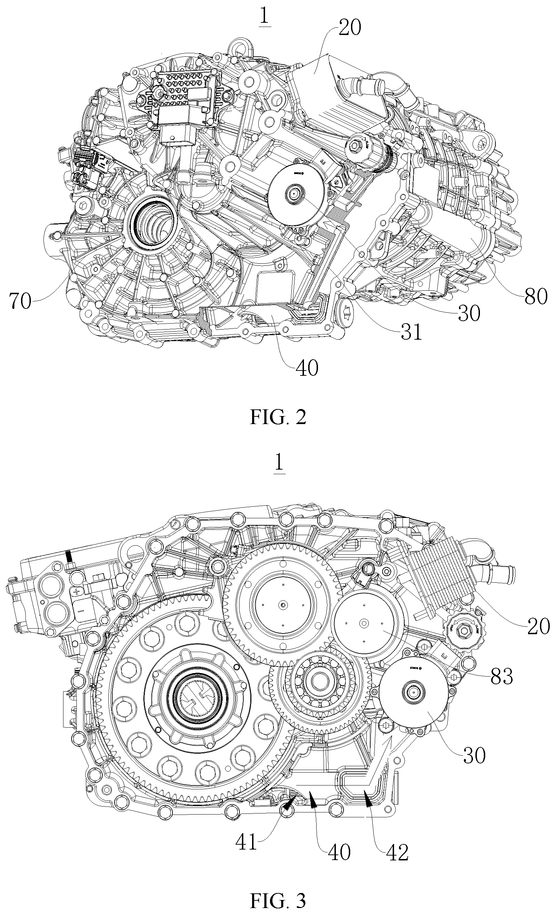

According to an optional embodiment of this application, as shown in FIG. 3, the oil pump assembly 30 is disposed diagonally below an output shaft 83 of the motor 80. It will be understood that a relatively small gear of the output shaft 83 of the motor 80 indicates relatively available space around the output shaft 83. The oil pump assembly 30 being disposed diagonally below the output shaft 83 of the motor 80 does not increase dimensions of the electric drive assembly 1 in all directions, so that the electric drive assembly 1 has a more compact structure and a higher integration level. In addition, the oil pump assembly 30 being disposed diagonally below the output shaft 83 of the motor 80 can shorten an oil pumping distance of the oil pump assembly 30, thereby ensuring a pump head of the oil pump assembly 30, and improving oil pumping effect. Pump head of oil pump assembly 30 = oil suction head + oil discharge head. The oil suction head refers to an oil pumping height of the oil pump assembly 30. Generally, a small height difference from the oil level to an inlet of the oil pump assembly 30 indicates good oil pumping effect. When an oil temperature is low or oil resistance is large, head loss may occur. Therefore, the oil pumping distance of the oil pump assembly 30 should be shortened as much as possible.

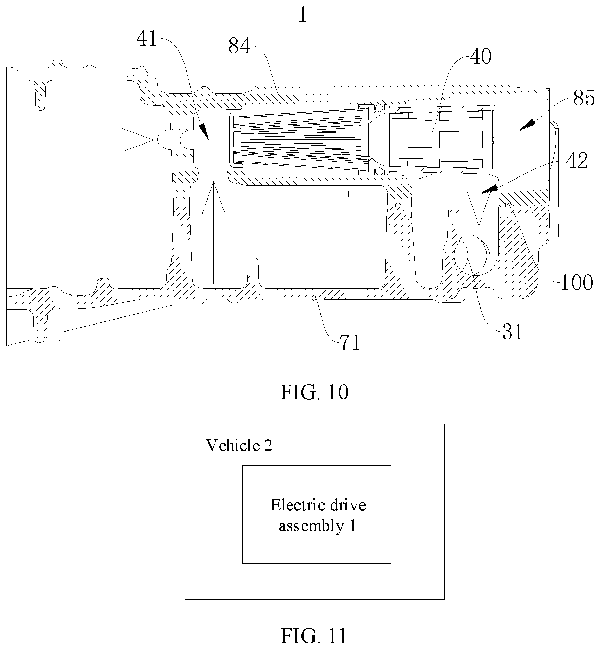

Specifically, as shown in FIG. 10, the transmission 70 is provided with a first case 71, the motor 80 is provided with a second case 84, the first case 71 is connected to the second case 84, the second case 84 is provided with a suction filter chamber 85, the suction filter assembly 40 is disposed in the suction filter chamber 85, an oil pumping pipe 31 is disposed between the suction filter assembly 40 and the oil pump assembly 30, the oil pumping pipe 31 is disposed at the first case 71, and the oil discharge port 42 is disposed opposite to an inlet of the oil pumping pipe 31. The first case 71 is connected to the second case 84, so that the transmission 70 and the motor 80 can be fixed together to improve the integration level of the electric drive assembly 1.

The second case 84 is provided with the suction filter chamber 85, so that the suction filter assembly 40 can be disposed in the suction filter chamber 85 and can be fixed, and the suction filter assembly 40 can stably filter the cooling oil in the suction filter chamber 85. The oil pumping pipe 31 is disposed between the suction filter assembly 40 and the oil pump assembly 30, and the oil pumping pipe 31 is disposed at the first case 71, so that the oil pumping pipe 31 can be fixed and disposed more stably. The oil discharge port 42 is disposed opposite to the inlet of the oil pumping pipe 31, so that the cooling oil filtered by the suction filter assembly 40 may flow into the oil pumping pipe 31 through the oil discharge port 42 and the inlet of the oil pumping pipe 31, and then may flow into the oil pump assembly 30. In addition, it will be noted that the suction filter chamber is disposed between the oil suction port 41 and the inlet of the oil pumping pipe 31, and is integrally cast on the housing 10. Such disposition can make full use of disposition space at the bottom of the housing 10, making disposition of the oil suction port 41 more flexible.

Optionally, as shown in FIG. 10, the electric drive assembly 1 further includes a sealing member 100, where the sealing member 100 is disposed between the first case 71 and the second case 84. The sealing member 100 may be configured to perform a sealing function. When the first case 71 and the second case 84 are connected, a gap between the first case 71 and the second case 84 may be sealed via the sealing member 100, so as to form a sealed oil passage. Therefore, the cooling oil flows into the oil pumping pipe 31 after being filtered by the suction filter assembly 40 from the oil suction port 41, thereby improving reliability and effectiveness of cooling oil filtering in the electric drive assembly 1.

A vehicle 2 according to an embodiment of this application includes the electric drive assembly 1 according to the foregoing embodiments, as shown in FIG. 11.

In the description of this application, it will be understood that orientation or location relationships indicated by terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are orientation or location relationships based on the accompanying drawings, and are merely intended for ease of describing this application and simplifying description, rather than indicating or implying that an apparatus or element in question needs to have a specific orientation or needs to be constructed and operated in a specific orientation. Therefore, such terms cannot be construed as a limitation on this application.

In the description of this application, "a first feature" and "a second feature" may include one or more features. In the description of this application, "a plurality of" means two or more. In description of this application, that the first feature is "above" or "below" the second feature may be that the first feature is in direct contact with the second feature, or may be that the first feature is not in direct contact with the second feature but in contact with the second feature through another feature between the first feature and the second feature. In description of this application, that the first feature is "above", "over", or "on" the second feature may be that the first feature is right above or diagonally above the second feature, or merely mean that a horizontal height of the first feature is greater than that of the second feature.

In the description of this specification, descriptions referring to terms "one embodiment", "some embodiments", "example embodiments", "examples", "specific examples" or "some examples" indicate that specific features, structures, materials or characteristics described in connection with this embodiment or example are included in at least one embodiment or example of this application. In this specification, the illustrative expressions of the above terms do not necessarily refer to the same embodiment or example.

Although embodiments of this application have been illustrated and described, a person of ordinary skill in the art will understand that various changes, modifications, substitutions and variations may be made to these embodiments without departing from the principles and purposes of this application, the scope of this application is defined by the claims and any equivalents thereof.

## Claims

1. An electric drive assembly (1), comprising:
a housing (10), an oil chamber (11) being formed at a bottom of the housing (10);
a cooling assembly (20), the cooling assembly (20) being disposed in the housing (10);
an oil pump assembly (30), the oil pump assembly (30) being disposed in the housing (10), and the oil pump assembly (30) being separately in communication with the oil chamber (11) and the cooling assembly (20) to pump cooling oil in the oil chamber (11) into the cooling assembly (20); and
a suction filter assembly (40), the suction filter assembly (40) being disposed in the oil chamber (11), the suction filter assembly (40) being provided with an oil suction port (41) and an oil discharge port (42), the oil discharge port (42) being in communication with the oil pump assembly (30), and the oil suction port (41) being located below an oil level of the cooling oil in the oil chamber (11) in response to a vehicle tilting laterally.

2. The electric drive assembly (1) according to claim 1, wherein in response to the vehicle tilting forward, the oil level of the cooling oil has a first intersection position (50) with the bottom of the housing (10); in response to the vehicle tilting backward, the oil level of the cooling oil has a second intersection position (60) with the bottom of the housing (10); and the oil suction port (41) is located between the first intersection position (50) and the second intersection position (60).

3. The electric drive assembly (1) according to claim 1 or 2, wherein a cross section of the oil suction port (41) is configured as an arc structure.

4. The electric drive assembly (1) according to any one of claims 1 to 3, further comprising:
a transmission (70), the transmission (70) being disposed at an upper left of the oil chamber (11); and
a motor (80), the motor (80) being disposed at an upper right of the oil chamber (11), and the transmission (70) and the motor (80) being separately in communication with an oil outlet of the cooling assembly (20).

5. The electric drive assembly (1) according to claim 4, wherein an oil return portion (81) is disposed at the housing (10), the oil return portion (81) is disposed below the motor (80), and the oil return portion (81) is disposed to be inclined toward the oil chamber (11); and an angle at which the vehicle tilts to the right is α, an included angle between the oil return portion (81) and a horizontal plane is β, and a relationship between α and β is: β≥α.

6. The electric drive assembly (1) according to claim 4 or 5, further comprising: a motor end cover (90), the motor end cover (90) being disposed at an end of the motor (80) away from the transmission (70), and the motor end cover (90) being disposed to protrude toward an interior of the housing (10).

7. The electric drive assembly (1) according to any one of claims 4 to 6, wherein the oil pump assembly (30) is disposed diagonally below an output shaft (83) of the motor (80).

8. The electric drive assembly (1) according to any one of claims 4 to 7, wherein the transmission (70) is provided with a first case (71), the motor (80) is provided with a second case (84), the first case (71) is connected to the second case (84), the second case (84) is provided with a suction filter chamber (85), the suction filter assembly (40) is disposed in the suction filter chamber (85), an oil pumping pipe (31) is disposed between the suction filter assembly (40) and the oil pump assembly (30), the oil pumping pipe (31) is disposed at the first case (71), and the oil discharge port (42) is disposed opposite to an inlet of the oil pumping pipe (31).

9. The electric drive assembly (1) according to claim 8, further comprising: a sealing member (100), the sealing member (100) being disposed between the first case (71) and the second case (84).

10. A vehicle (2), comprising the electric drive assembly (1) according to any one of claims 1 to 9.
